Europäisches Patentamt

European Patent Office

Office européen des brevets

(19)

(11) Numéro de publication : **0 373 056 B1**

(12) # FASCICULE DE BREVET EUROPEEN

(45) Date de publication du fascicule du brevet :
**10.06.92 Bulletin 92/24**

(51) Int. Cl.⁵ : **F16H 7/12**

(21) Numéro de dépôt : **89403345.5**

(22) Date de dépôt : **01.12.89**

(54) **Galet tendeur pour transmission par lien souple.**

(30) Priorité : **05.12.88 FR 8816037**

(43) Date de publication de la demande :
**13.06.90 Bulletin 90/24**

(45) Mention de la délivrance du brevet :
**10.06.92 Bulletin 92/24**

(84) Etats contractants désignés :
**AT BE CH DE ES FR GB GR IT LI LU NL SE**

(56) Documents cités :
**EP-A- 114 779**
**CH-A- 318 686**
**DE-C- 3 528 442**

(73) Titulaire : **CAOUTCHOUC MANUFACTURE ET PLASTIQUES SOCIETE ANONYME**
**143 bis, rue Yves Le Coz**
**F-78000 Versailles (FR)**

(72) Inventeur : **Diard, Jean-Claude**
**18, rue Fontenelles**
**F-95500 Bessancourt (FR)**

EP 0 373 056 B1

## Description

L'invention est du domaine des transmissions par lien souple fonctionnant par adhérence mécanique entre lien souple et poulies, telles qu'on en rencontre pour l'entraînement des accessoires sur les moteurs d'automobile, où la force de tension est assurée par un galet, placé au bout d'un bras de levier, actionné par un couple élastique.

La mise en oeuvre de ce couple élastique est assurée par un sandwich plan d'élastomère adhérisé à des armatures rigides, sollicité en cisaillement, tandis que la composition élastomérique est soumise à une précontrainte homogène, axiale, au moyen d'un matériau de friction, capable d'assurer l'amortissement des variations élastiques de tension.

Les transmissions par lien souple, fonctionnant par adhérence mécanique, dénommées courroies, sont indispensables à l'industrie des moteurs thermiques, sur automobile ou à poste fixe, pour l'entraînement des divers accessoires.

L'entraînement peut être positif, réalisé par chaîne articulée lubrifiée aussi bien que par courroie souple à denture dite synchrone. Dans ces deux cas, comme dans les courroies à adhérence mécanique, la fonction de rattrapage des usures ainsi que des dilatations thermiques, est assurée par un dispositif, appelé tendeur, et fonctionnant, en général, par un excentrique ou par déplacement de l'une des poulies. Néanmoins, les pulsations dynamiques et la rigidité longitudinale de ce lien souple, dans les entraînements synchrones, obligent le constructeur du matériel à rendre fixes les entraxes - après le réglage - quitte à rechercher une compensation positive des dilatations comme l'expose la demande de brevet FR 88 13147 de la demanderesse (EP-A 362451, publié le 11/04/90).

Au contraire, les transmissions par adhérence mécanique demandent une tension permanente qui est généralement assurée par l'élasticité des armatures souples, en particulier dans la technique des courroies trapézoidales.

Dans cette catégorie, comme celle précédente décrite, le dispositif tendeur est, pour des raisons différentes, bloqué en position fixe après les réglages préliminaires.

Dans la génération la plus récente de liens souples, dite courroies multistries, l'adhérence mécanique se fait par une pluralité de faces inclinées sur les flancs coniques des poulies.
Une grande flexibilité de l'armature est compatible avec des matériaux câblés de grande rigidité longitudinale tels que le polyester, la fibre de verre et l'aramide.

Les constructeurs de moteurs recherchent un dispositif tendeur restant élastique en service, le plus généralement constitué d'un galet supplémentaire de renvoi, porté par un bras de levier à tension élastique, appelé dans la suite "galet tendeur".

Divers brevets de galets tendeurs font appel à des élastomères pour assurer ladite tension élastique, tels le brevet US 4.144.772 de The Toro Company décrivant un dispositif à bague de torsion emmanchée dans un carré qui assure, à la fois, la tension et l'amortissement. Le brevet GB 2.070.727 de Alan Crosley Pritchard décrit une technique semblable mais appliquée sur un plateau basculant et le brevet EP 0.157.193 de RIV-SKF l'applique à un tendeur par excentrique. On connait, également, des tendeurs rotatifs, tel que celui décrit dans le brevet CH 318.686 de BAEHNI, où le dispositif amortisseur en rotation est formé d'un plateau enfermé entre deux plaques de caoutchouc précontraintes.

Les brevets US 4.702.727 de Daimler-Benz, US 4.472.162 de Dyneer Corporation et FR 2.509.408 de Litens Automotive décrivent l'usage d' élastomère pour l'amortissement, plus ou moins par friction, tandis qu'une force élastique est exercée par ressort métallique, ce qui permet d'établir une tension peu variable avec les déplacements dynamiques de l'équilibre.

La fiabilité des tensions requise par l'industrie automobile s'accorde mal avec des amortissements assurés par friction d'élastomères, qui peuvent varier avec l'apparition de poudrette d'usure ou au contraire de "virage au gras" sur des faces trop sollicitées par des mouvements alternatifs. Pour cette raison, une bague adhérisée à des armatures concentriques a été utilisée dans le brevet US 3.975.965 de Dayco Corporation et dans le brevet EP 0.114.779 de la demanderesse. La rotation de la bague intérieure est le moyen de réglage de la tension dans les deux case qui diffèrent par le moyen de rétablissement de la tension, en entretien.

La technique de précontrainte radiale, par rétreint d'une bague extérieure, par dudgeonnage d'une bague intérieure, ou les deux lorsque l'articulation dispose d'une armature intermédiaire sans déformation, apporte une rigidité au basculement dit conique et permet de solliciter davantage l'élastomère à la fatigue de torsion. Celle-ci est, toutefois, limitée par la géométrie de la bague élastique dont l'usage, pour exercer des efforts de tension notables, nécessite un encombrement en longueur important sur l'axe de rotation du levier portant le galet tendeur, ce qui exigerait une épaisseur du dispositif qui est, en fait, rarement disponible.

Pour éviter des variations rapides de cette tension avec celles du périmètre du lien souple, dues à l'usure ou au fluage, une bonne flexibilité s'avère nécessaire et demande, au contraire, de donner de l'épaisseur à la bague annulaire d'élastomère . Les deux motifs accroissent le volume occupé et le poids du dispositif tendeur, tandis que l'amortissement est limité par les caractéristiques visco-élastiques du matériau élastomère, même s'il est précontraint par les techniques citées.

Par ailleurs, un autre inconvénient des solutions connues est que le maintien au basculement dit conique nécessite, parfois, l'adjonction de plusieurs roulements pour s'opposer aux déformations des bagues élastiques.

C'est pourquoi la présente invention propose d'améliorer les performances, dans ce domaine, en faisant appel, pour la tension du levier, à un couple élastique en cisaillement de torsion d'un sandwich plan d'élastomère adhérisé à des armatures rigides, préférentiellement circulaires.
L'épaisseur n'est pas limitée car, alors, elle peut demeurer faible tout en apportant, néanmoins, la grande flexibilité nécessaire, au besoin moyennant l'utilisation d'armatures intermédiaires planes.
Une (ou deux) armature(s) intermédiaire(s) représente(nt) une solution technologiquement intéressante.

Les conditions de travail à la fatigue alternative étant nettement améliorées par une précontrainte permanente dans la direction perpendiculaire, le "feuilletage", apporté par lesdites armatures intermédiaires, confère, dans la direction axiale, une rigidité nettement plus élevée que dans les autres directions.

Sous l'effet de la composante de réaction au couple de torsion, un cisaillement de translation, homogène, supplémentaire, provoquerait dans le plan du sandwich un excentrage notable entre les armatures, puisque la rigidité concernée est peu élevée.

Sans qu'un tel équilibre soit rédhibitoire, il est plus intéressant, cependant, de faire pivoter les deux armatures extrêmes, l'une sur l'autre, par un palier garni de bague antifriction, résistant aux variations élastiques de la tension. Il y a, donc, par réaction sur ce palier, un amortissement desdites variations élastiques proportionnel à la tension, ce qui est tout à fait favorable.

En effet, cette caractéristique de proportionnalité à la tension est régie par les mêmes lois que l'amortissement visco-élastique, mais sa valeur est beaucoup trop faible.

La valeur absolue de l'amortissement peut être accrue autant que désiré, du fait de l'existence de la force axiale de précompression homogène.

En effet, une pression de l'ordre de dix à vingt bars par exemple, est permise par le facteur de forme que présente le sandwich circulaire plan. Cette pression, multipliée par le coefficient de frottement d'une bague plane, en matériau dit antifriction, permet d'exercer un amortissement du couple de torsion qui atteint le même ordre de grandeur que la contrainte de cisaillement pur permanent, exercée sur ses armatures par l'élastomère. La combinaison de ces forces permet un amortissement des variations de la tension élastique (avec un complément proportionnel venu de la friction sur le palier cylindrique de centrage). Il est ainsi beaucoup plus facile d'approcher les valeurs critiques de l'amortissement visco-élastique requis.

Les frictions de surfaces de séparation entre l'élastomère et le métal du support, décrites dans les solutions de l'art antérieur, n'apportent, en effet, pas une stabilité satisfaisante.

L'invention est, donc, constituée par un galet tendeur pour transmission par lien souple fonctionnant par adhérence mécanique, comme défini dans la revendication 1 dont les éléments du préambule sont connus du document EP-A 114779.

L'objet de l'invention, ainsi que ses variantes, seront mieux compris à la lecture de la description accompagnant les dessins, dans lesquels :
 – la figure 1 est une vue de face d'un accessoire entraîné par le moteur, montrant la disposition relative du galet tendeur, du lien souple et des poulies.
 – la figure 2 est une coupe axiale dans le plan du levier tendeur du galet et de son palier élastique.

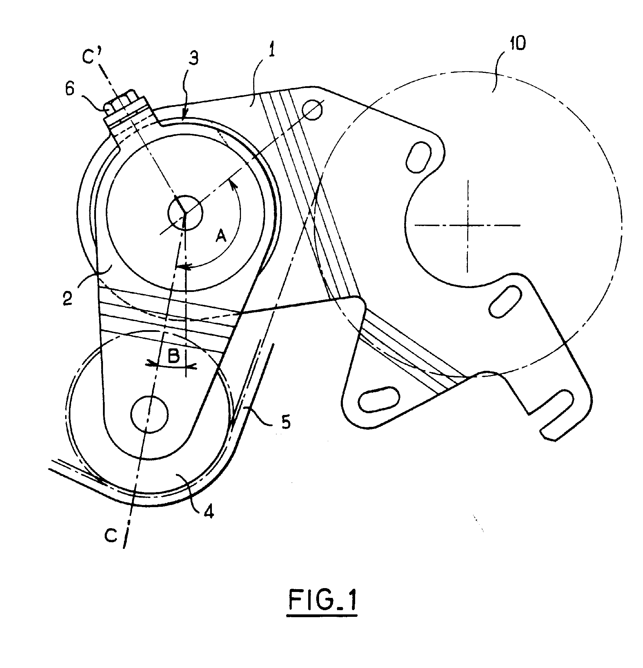

La figure 1 est une vue de face, dans la région d'un accessoire - alternateur ou pompe hydraulique - entraîné par le moteur d'une automobile. Il n'est montré, pour plus de clarté, que la plaque support (1), par exemple en tôle d'acier pliée ou emboutie, fixée par plusieurs trous ou boutonnières de réglage, sur ledit accessoire.
Un levier (2), également en tôle emboutie, articulé sur un sandwich élastique plan (3), non visible, porte le palier du galet de renvoi (4). Le rôle dudit galet de renvoi (4) est de tendre le lien souple (5) et d'accroître, en même temps, l'angle d'enroulement dudit lien souple (5) sur la poulie menée (10) qui entraîne l'accessoire en rotation.

L'angle d'orientation (A) du levier (2) par rapport à un axe fixe présente un couple de rappel élastique vers une position qui, à l'équilibre, serait en (B) pour l'axe du levier (2).

Une disposition intéressante pour le montage sur chaîne dudit accessoire consiste à appliquer la déformation élastique contrôlée chez le fabricant et à bloquer la rotation, dans cette position, au moyen d'une vis (6) qui interdit le tourillonnement du galet tendeur.

Le réglage des boutonnières au montage consiste donc à donner la valeur voulue à l'angle (A), sans se préoccuper de la position élastiquement neutre définie par l'angle (B) qui reste déterminée par le fabricant.

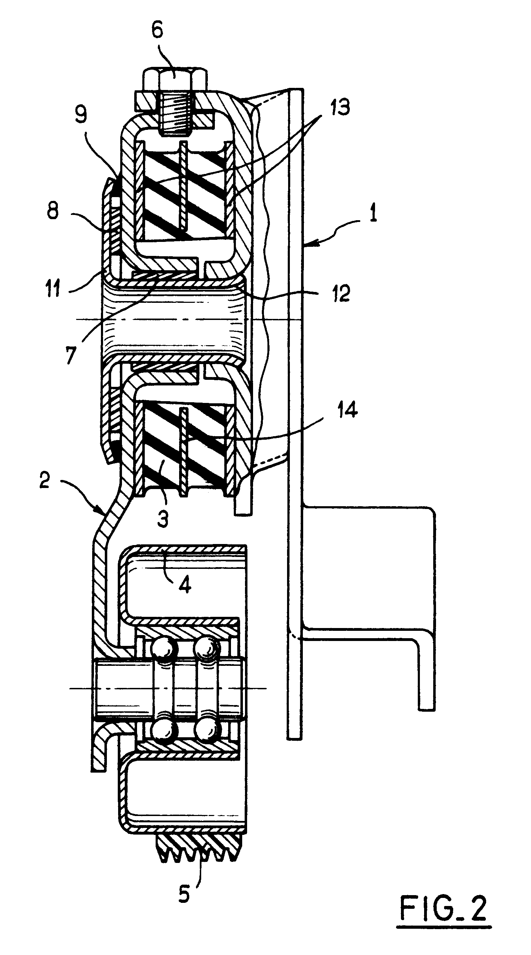

La figure 2, par une coupe axiale, définie en CC' sur la figure 1, explique le tourillonnement du levier (2) sur la plaque support (1).

Ladite plaque support (1) est représentée en coupe partielle dans cette variante, où la réalisation matérielle du palier de tourillonnement est assurée par la bague de précontrainte (11), après l'assemblage, serti par expansion de son axe tubulaire à l'extrêmité (12).

Une disposition inverse (non représentée) serait tout à fait réalisable, dans laquelle la plaque support (1) porterait l'axe de tourillonnement sur lequel serait sertie la bague de précontrainte (11).

Dans l'une ou l'autre variante, l'axe porte une bague antifriction (7), cylindrique, comportant un matériau à faible coefficient de frottement tel que, à titre d'exemple non limitatif, du polytétrafluorure de vinyle, sur laquelle tourillonne, sans jeu notable, un axe cylindrique supporté, par exemple, par emboutissage de la tôle du levier (2).

Ledit levier (2), de même que la plaque support (1), présente une partie plane de révolution où repose, en appui simple, un sandwich élastique plan (3). Ledit sandwich élastique plan (3) exerce une force axiale de précompression par ses armatures (13), de préférence de révolution, et un couple de torsion par l'adhérence mécanique desdites armatures (13) sur les faces antagonistes de la plaque support (1), pour un côté, et du levier (2), pour l'autre côté, les armatures (13) pouvant être identiques ou différentes.

Pour celà, ladite adhérence mécanique doit être améliorée par rapport à une simple friction, par exemple par coincidence de trous dans les armatures (13) et de bosses ou crevés dans les faces antagonistes, ou bien des cannelures ou des emboutis analogues, ou bien un simple moletage approprié.

Comme le repérage de la position neutre du rappel élastique, défini par l'angle (B) de la figure 1, demande une certaine précision, une disposition angulaire des creux et bosses peut être prévue en nombres différents, premiers entre eux. La recherche de position se fait, alors, par rotation du sandwich élastique plan (3).

Une autre solution de repérage consiste à déformer localement armature (13) ou tôle constituant les composants (1) et (2), après l'assemblage, par un coup de pince sur leurs bords. Pour ce faire, les armatures (13) peuvent ne pas être de révolution mais présenter un crantage. La rigidité axiale du sandwich élastique plan (3) peut avantageusement être accrue par l'interposition d'une (ou plusieurs) armature(s) de frettage intermédiaire(s) (14), généralement en tôle d'acier comme les armatures (13).

Le plus généralement, chaque armature de frettage intermédiaire (14) est une une armature plane. Cependant, pour exercer des contraintes de cisaillement plus homogènes, ladite armature de frettage intermédiaire (14) peut être usinée légèrement biconique de façon que l'épaisseur du mélange élastomérique croisse, en toute rigueur, proportionnellement au rayon, depuis l'intérieur du sandwich plan (3) vers l'extérieur.

L'effort de précontrainte axiale est exercé, au moment de l'assemblage, par la bague de précontrainte (11) à travers une rondelle antifriction plane (8), comportant un matériau à faible coefficient de frottement tel que, à titre d'exemple non limitatif, du polytétrafluorure de vinyle. La bague est ensuite sertie par son extrêmité (12).

Un joint d'étanchéité (9), en élastomère, de section torique ou plane, protège, avantageusement, la rondelle antifriction plane (8) des entrées de poussière ou autres pollutions, sans intervenir notablement sur le couple de rappel élastique.

En effet, la rigidité axiale, conséquence du frettage du sandwich caoutchouc-métal par une (ou plusieurs) armature(s) intermédiaire(s), permet d'exercer, sur la rondelle antifriction plane (8), des pressions dépassant 12 à 25 bars par exemple.

Le polytétrafluorure de vinyle, cité - à titre d'exemple non limitatif - comme matériau antifriction, est connu pour présenter, dans ces conditions, un coefficient de démarrage du frottement peu supérieur au coefficient de glissement amorcé, par exemple égal à 0,10 ou 0,11 et toujours inférieur à 0,15.

La contrainte tangentielle que cette friction peut opposer au couple de rappel élastique du galet tendeur a donc un ordre de grandeur de 2 à 2,5 daN/cm2, assez voisin de celui que peut exercer le cisaillement de l'élastomère à la périphérie du sandwich élastique plan (3).

Avec le choix des rayons d'action moyens dudit sandwich élastique plan (3) et de la rondelle antifriction plane (8) qui est, généralement, de plus faible diamètre extérieur, le constructeur peut adapter la friction pour réaliser l'amortissement voulu du couple tendeur à une valeur critique ou inférieure. Toutes les vibrations et sollicitations parasites ne peuvent que provoquer le début du glissement et, en conséquence, un manque de tension du lien souple ne peut se produire à la suite d'un collage intempestif.

Contrairement aux solutions de l'art antérieur, le maintien au basculement du levier (2) (dans le plan de la figure) est assuré par la rigidité de l'appui précontraint sur la rondelle antifriction plane (8) et non par l'encastrement de la bague antifriction cylindrique (7). Le jeu de ladite bague antifriction cylindrique (7) a peu de conséquence car la réaction du couple tendeur met toujours en appui ce jeu, s'il existe.

A tout effort parasite sur le galet, perpendiculairement au plan de la transmission, s'oppose, donc, la rigidité des pièces métalliques.

Lorsque le fabricant a contrôlé le couple de rappel élastique et déterminé la position de l'angle (B), qu'il préconise en service, par rapport à la position de repos, une vis de blocage (6) permet de neutraliser le tourillonnement jusqu'au montage sur le moteur.

Les figures montrent que des équerres ménagées, l'une sur la plaque support (1) et l'autre sur le levier (2), peuvent porter l'une un filetage, l'autre une boutonnière, dans ce but. Le serrage de la vis (6) peut encore être utilisé en entretien pour préserver la tension préconisée, avant un démontage. Ladite vis doit être retirée lors du montage sur le moteur, pour éviter que ne se produise un blocage sous l'effet des vibrations.

Cette disposition s'avère favorable en cas de variations de tension avec la température : si tous les entraxes se dilatent, de façon notable, avec l'échauffement du carter, l'élévation de température provoque une diminution du module de l'élastomère et, en conséquence, du couple de torsion. Cet effet réduit les risques d'accroissement exagéré de tension à haute température. A l'opposé, la tension a tendance à s'accroître en même temps que le module aux très basses températures, ce qui évite la perte de tension, usuelle en l'absence de dispositif tendeur.

En résumé, l'invention présente une solution, sûre et de réalisation économique, lorsque le constructeur d'un moteur a besoin d'une tension élastique permanente sur une transmission par lien souple tel qu'une courroie multistries. La pose d'un ensemble pré-réglé aux valeurs préconisées est rendue possible et automatisable, sans que soient interdits les démontages pour entretien.

L'intégration, au galet tendeur pour transmission par lien souple fonctionnant par adhérence mécanique, de la fonction tendeur élastique avec la fonction amortissement, fournit un ensemble compact et de grande rigidité, résistant aux vibrations subies sur un moteur.

## Revendications

1. Galet tendeur pour transmission par lien souple (5) fonctionnant par adhérence mécanique, porté par un levier (2) et assurant la tension par déformation d'un élément de rappel élastique en élastomère adhérisé à des armatures rigides (13), ledit levier (2) étant positionné pour tourner sur un palier fixe par rapport à une plaque support (1), ledit élément de rappel élastique étant disposé entre ladite plaque support (1) et ledit levier (2),
**caractérisé en ce que**
ledit levier (2) est articulé en rotation sur ledit palier par l'intermédiaire d'une bague antifriction (7),
ledit levier (2) est retenu en basculement axialement par rapport audit palier par appui rigide sur une rondelle antifriction plane (8),
ledit élement de rappel élastique est un sandwich plan (3),
ledit élément de rappel élastique exerce, par lesdites armatures rigides (13), à travers ladite rondelle antifriction plane (8), une force axiale de précompression et, par l'adhérence mécanique des armatures rigides (13) sur les faces antagonistes de la plaque de support (1) et du levier (2), un couple de torsion élastique dû au cisaillement en torsion dudit sandwich plan (3), et les contraintes dues à la force axiale de précompression sont aux moins dix fois supérieures aux contraintes de torsion élastique.

2. Galet tendeur selon la revendication 1, caractérisé en ce que le coefficient de friction de la rondelle antifriction plane (8) sur l'appui en regard du levier (2) est toujours inférieur à 0,15 ce qui permet à la précontrainte axiale sur ladite rondelle antifriction plane (8) d'amortir les variations du couple de torsion élastique.

3. Galet tendeur selon la revendication 1, caractérisé en ce que la rigidité axiale du sandwich élastique plan (3), entre ses armatures (13), est accrue par l'adjonction d'au moins une armature de frettage intermédiaire (14).

4. Galet tendeur selon la revendication 3, caractérisé en ce que chaque armature de frettage intermédiaire (14) est plane ou biconique.

## Patentansprüche

1. Spannrolle für eine durch mechanischen Kraftschluß bewirkte Kraftübertragung durch einen flexiblen Riemen (5), die von einem Hebel (2) getragen wird und die die Spannung durch Verformung eines elastischen Rückstellgliedes aus an starren Beschlagteilen (13) anhaftendem Elastomer sicherstellt, wobei der Hebel (2) auf einem bezüglich einer Stützplatte (1) ortsfesten Lager drehbar gelagert ist und das elastische Rückstellglied zwischen der Stützplatte (1) und dem Hebel (2) angeordnet ist,
**dadurch gekennzeichnet, daß**
der Hebel (2) mittels eines reibungsarmen Ringes (7) drehbar an dem Lager angelenkt ist,
der Hebel (2) durch starre Abstützung auf einer planen reibungsarmen Scheibe (8) in bezug auf das Lager axial verschwenkbar gehalten ist,
das elastische Rückstellglied als plane Sandwichanordnung (3) ausgebildet ist,
das elastische Rückstellglied über die starren Beschlagteile (13) durch die plane reibungsarme Scheibe (8) hindurch eine axiale Vorspannkraft sowie aufgrund des mechanischen Kraftschlusses der starren Beschlagteile (13) mit den Gegenflächen der Stützplatte (1) und des Hebels (2) ein elastisches Drehmoment ausübt, das durch die Torsionsschubkraft der planen Sandwichanordnung (3) bedingt ist, und die durch die axiale Vorspannkraft bedingten Spannungen mindestens zehnmal höher sind als die Spannungen der elastischen Torsion.

2. Spannrolle nach Anspruch 1, dadurch gekennzeichnet, daß der Reibungskoeffizient der planen reibungsarmen Scheibe (8) bezüglich der Abstützung des Hebels (2) stets kleiner ist als 0,15, wodurch die Schwankungen des elastischen Drehmomentes von der auf die plane reibungsarme Scheibe (8) ausgeübten axialen Vorspannung gedämpft werden können.

3. Spannrolle nach Anspruch 1, dadurch gekennzeichnet, daß die axiale Steifigkeit der planen elastischen Sandwichanordnung (3) zwischen ihren Beschlagteilen (13) durch Einfügung mindestens eines zwischenliegenden Versteifungsrings (14) erhöht ist.

4. Spannrolle nach Anspruch 3, dadurch gekennzeichnet, daß jeder zwischenliegende Versteifungsring (14) plan oder doppelkonisch ausgebildet ist.

## Claims

1. Tensioning roller for a flexible link (5) transmission operating by mechanical adhesion, carried by a lever (2) and ensuring tension by deformation of an elastic return element made of elastomeric material bonded to rigid reinforcements (13), said lever (2) being positioned so as to rotate on a bearing which is fixed relative to a supporting plate (1), said elastic return element being arranged between said supporting plate (1) and said lever (2),
characterised in that
said lever (2) is rotatably articulated to said bearing by means of an anti-friction ring (7),
said lever (2) is tiltably retained axially relative to said bearing by rigid support on a plane anti-friction washer (8),
said elastic return element is a plane sandwich (3), said elastic return element exerts, via said rigid reinforcements (13), through said plane anti-friction washer (8), an axial precompressive force and, by mechanical adhesion of the rigid reinforcements (13) to the opposing faces of the supporting plate (1) and of the lever (2), an elastic torsional moment due to torsional shear of said plane sandwich (3),
and the stresses due to the axial precompressive force are at least ten times greater than the elastic torsion stresses.

2. Tensioning roller according to claim 1, characterised in that the coefficient of friction of the plane anti-friction washer (8) against the opposing thrust of the lever (2) is always less than 0.15, which allows the axial pretension on said plane anti-friction washer (8) to dampen variations in the elastic torsional moment.

3. Tensioning roller according to claim 1, characterised in that the axial rigidity of the plane elastic sandwich (3), between its reinforcements (13), is increased by the addition of at least one intermediate binding reinforcement (14).

4. Tensioning roller according to claim 3, characterised in that each intermediate binding reinforcement (14) is plane or biconical.

FIG.1

FIG. 2